# EUROPÄISCHE PATENTSCHRIFT

(11) **EP 0 746 413 B1**
(45) Veröffentlichungstag und Bekanntmachung des Hinweises auf die Patenterteilung: **24.05.2000**
(21) Anmeldenummer: 95911210.3
(22) Anmeldetag: 02.03.1995
(51) Int. Cl.: B03D 1/14, B03D 1/24

(54) **RECHTECK-FLOTATIONSANLAGE**
RECTANGULAR FLOTATION PLANT
INSTALLATION DE FLOTTATION RECTANGULAIRE

(30) Priorität: 03.03.1994 DE 4407064
(43) Veröffentlichungstag der Anmeldung: 11.12.1996
(73) Patentinhaber: Menke, Lucas, 80331 München (DE)
(72) Erfinder: Menke, Lucas, 80331 München (DE)
(74) Vertreter: Rasch, Michael
(86) Internationale Anmeldenummer: DE9500311
(87) Internationale Veröffentlichungsnummer: WO9523647

(56) Entgegenhaltungen:
- EP-A- 0 442 463
- DE-A- 3 634 903
- DE-A- 3 839 371
- FR-A- 1 536 599
- US-A- 3 809 240

## Beschreibung

Die Erfindung betrifft eine Vorrichtung zur Gasblasenflotation gemäß dem Oberbegriff des Patentanspruchs 1. Eine derartige Vorrichtung ist aus der DE-A-3 839 371 bekannt.

Die Gasblasenflotation wird auf dem Gebiet der Trennung von Feststoffen und Flüssigkeiten und insbesondere im Bereich der Wasser- und Abwasserreinigung eingesetzt. Dabei wird vornehmlich die sog. Druckentspannungsflotation angewandt, bei der neben einer feststoff- bzw. schwebstoffhaltigen Flüssigkeit eine unter Druck gasgesättigte Flüssigkeit zugesetzt und entspannt wird, so daß sich durch die Entspannung Gasblasen bilden, die sich an den abzutrennenden Schwebstoffen anlagern und diese im Flotationsbehälter an die Oberfläche befördern, so daß diese dort abgeschöpft werden können. Die von den Schwebstoffen befreite Klarflüssigkeit wird im Bereich des Flotationsbehälterbodens abgeleitet.

Bisherige Vorrichtungen zur Gasblasenflotation umfassen im wesentlichen eine Luftlösevorrichtung, in der unter erhöhtem Druck Gas im flüssigen Medium gelöst wird. Nach einer bestimmten Verweilzeit wird das Gas-Flüssigkeitsgemisch auf einen niedrigeren Druck entspannt, wobei eine Gasübersättigung des flüssigen Mediums eintritt und das nicht mehr gelöste Gas in Form von feinen Mikroblasen frei wird. Der feststoffhaltigen Flüssigkeit wird vor Einleitung in den Flotationsbehälter vorzugsweise ein Fällungs- bzw. Flockungshilfsmittel zugegeben, damit die abzutrennenden Stoffe in eine flockenartige Form übergeführt werden können.

Die Flotationsbehälter sind entweder rund oder rechteckig ausgebildet. Bei den rechteckigen Flotationsbehältern ist üblicherweise eine Seite des Rechtecks deutlich länger ausgeführt als die andere und die Einströmung der schwebstoffhaltigen Flüssigkeit erfolgt stets stirnseitig über die kürzere Seite des Rechtecks verteilt. Die Anlage wird der Länge nach durchströmt, wobei an der der Einströmseite gegenüberliegenden zweiten kurzen Seite das Klarwasser abgezogen wird.

Die Strömungsgeschwindigkeit in den bisher bekannten rechteckigen, in Längsrichtung durchströmten Flotationsanlagen ist gleichförmig und nahezu konstant. Um durch ein größeres Volumen geringe Strömungsgeschwindigkeiten zu erreichen, werden die Flotationsbehälter relativ tief gebaut. Ein wesentlicher Nachteil dieses bekannten Systems liegt im Erfordernis eines gegenüber runden Flotationsbehältern größeren Volumens bei gleichzeitiger geringerer spezifischer Belastbarkeit der Anlage. Es sind zwar Anlagenkonfigurationen bekannt, bei denen die Leistungsfähigkeit solcher reehteckiger Anlagen durch den Einbau von schräggestellten Lamellen erhöht werden konnte, jedoch hat dies eine höhere Verschmutzungsempfindlichkeit als Nachteil zur Folge.

Aus der DE 36 34 903 A1 ist eine Flotationsvorrichtung mit einem liegend angeordneten, zylindrischen Flotationstank bekannt, bei der mehrere exzentrische Flüssigkeitseinlässe vorhanden sind.

Die DE-A-3 839 371, gemäß welcher der Oberbegriff des Patentanspruchs 1 abgefaßt wurde, Offenbart eine flotations vorrichtung die aus mehreren dreieckigen Flotationsbehältern besteht, die miteinander zur Bildung einer rechteckigen Vorrichtung zusammenfaßbar sind.

Hiervon ausgehend liegt der Erfindung die Aufgabe zugrunde, eine Vorrichtung zur Gasblasenflotation anzugeben, um den konstruktiven Aufwand bei gleichzeitig unvermindertem Abscheidungsgrad zu vermindern .

Diese Aufgabe wird erfindungsgemäß durch die im Kennzeichen des Anspruchs 1 angegebenen Merkmale gelöst.

Durch die Erfindung ist es bei einem rautenförmigen oder quadratischen Behälter möglich, eine wesentliche bauliche Vereinfachung dadurch zu erzielen, daß ein einziges Ablaufrohr für das Flotat angeschlossen werden muß und einfach gestaltete Abschöpfeinrichtungen verwendbar sind, die von jeder Behälterhälfte auch das Flotat in eine gemeinsame Ablaufrinne schöpfen.

Die Unteransprüche beinhalten vorteilhafte Weiterbildungen des Erfindungsgedankens.

Die Erfindung eignet sich besonders zur Trennung von festen und flüssigen Phasen, insbesondere zur Abtrennung von Feststoffen und lipophilen Stoffen aus einer flüssigen Phase wie einer Suspension.

Vorzugsweise sind die Räumvorrichtungen als zwei gegenläufig rotierende, zueinander parallele Mehrfach-Paddelräumer ausgebildet, zwischen denen eine Flotat-Abzugsrinne angeordnet ist. Dabei ist es zweckmäßig, wenn unterhalb der Abzugsrinne eine Klarflüssigkeits-Abführleitung angeordnet ist.

Gemäß einer weiteren Ausbildung der Erfindung ist unterhalb der Abschöpfrinne eine Trennwand vorgesehen, die den Flotationsbehälter in zwei dreieckige Flotationsteilbehälter aufteilt. Damit lassen sich durch geringen zusätzlichen Aufwand zwei getrennte Flotationseinrichtungen aufbauen, die sich für die Flotation verschiedener Flüssigkeiten oder von Flüssigkeiten mit verschiedenen Anteilen oder Zusammensetzungen an Schwebstoffen eignen. Die Abführung des Flotats bzw. der schwebstoff-freien Flüssigkeit kann je nach Bedarf über separate oder gemeinsame Abführeinrichtungen erfolgen.

Noch eine Weiterbildung der Erfindung sieht vor, daß am Boden des Flotationsbehälters mindestens ein Sedimentwischer vorgesehen ist. Dabei ist vorzugsweise am Behälterboden eine Schlammabführrinne ausgebildet, in die der mindestens eine schwenkbare Sedimentwischer Sedimentschlamm befördert. Vorteilhafterweise werden zwei um Vertikalachsen schwenkbare Sedimentwischer zu jedem Flüssigkeitseinlaß angeordnet, deren Drehpunkte im Bereich der anderen Behälterecken liegen und deren Schwenkbereiche bis in die Nähe der Flüssigkeitseinlässe reichen.

Vorzugsweise ist bei der vorliegenden Erfindung ein Flüssigkeitseinlaß für die schwebstoffhaltige Flüssigkeit und darunter ein separater Einlaß für gasblasenhaltige Flüssigkeit in den Behälterecken vorgesehen, wobei der Einlaß für gasblasenhaltige Flüssigkeit als Entspannungsventil ausgestaltet ist. Durch diese Direktentspannung von unter Druck stehender, gasgesättigter Flüssigkeit direkt in den Flotationsbehälter kann vorteilhafterweise vermieden werden, daß die gebildeten Gasblasen agglomerieren. Damit wird eine bestmögliche Ausnutzung der Gasblasen erreicht, denn es hat sich herausgestellt, daß die Flotationswirkung um so besser ist, desto kleiner die Gasblasen sind.

Durch die Weiterbildung der Anordnung eines horizontal verschwenkbaren Strömungsleitbleches oberhalb des Flüssigkeitseinlasses läßt sich eine gezielte Leitung des Flüssigkeitsstromes gleichmäßig in alle Richtungen erreichen.

Die Erfindung wird nachfolgend anhand der beigefügten Zeichnungen weiter erläuteil. Dabei zeigt:
- Fig. 1: eine Draufsicht einer erfindungsgemäßen Flotationsvorrichtung,
- Fig. 2: einen schematischen, vertikalen Diagonalschnitt durch einen Flotationsbehälter.
- Fig. 3: eine schematische Ansicht entlang der in Fig. 1 gezeigten Linie III-III, und
- Fig. 4: zwei Darstellungen der Flüssigkeitseinlässe,

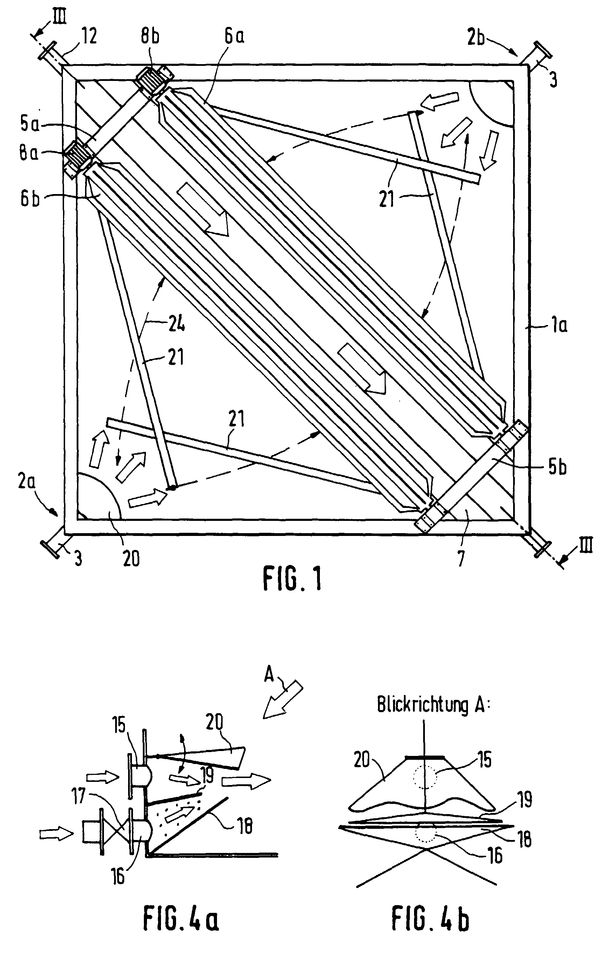

Der grundsätzliche Ablauf des Flotationsprozesses wird nachfolgend unter Bezugnahme auf die Figuren 1 bis 4 erläutert. Dabei wird auf die bevorzugte Anwendung der Erfindung zur Abwasserreinigung Bezug genommen. Die Erfindung ist jedoch auf diese Anwendung nicht beschränkt und eignet sich für alle Anwendungen, bei denen eine flüssige und eine nicht-flüssige und nicht-gasförmige Phase wie Schwebstoffe, lipophilen oder festen Stoffe getrennt werden sollen. Insbesondere ist die Erfindung im Bereich des Brauereiwesens einsetzbar.

Die in Fig. 1 gezeigte Flotationsvorrichtung besteht im wesentlichen aus einem quadratischen Flotationsbehälter **1a**, der im Bereich von zwei gegenüberliegenden Ekken jeweils einen Flüssigkeitseinlaß **2a** und **2b** aufweist, die jeweils über Zuleitungsrohre **3** mit schwebstoffhaltiger Flüssigkeit gespeist werden.

Im Bereich der zwei anderen Ecken sind zwei Stützträger **5a**, **5b** angeordnet auf denen sich Räumvorrichtungen **6a**, **6b** in Form von Paddelräumern abstützen, die parallel nebeneinanderliegend den Flotationsbehälter **1a** diagonal überspannen. Die beiden Paddelräumer **6a**, **6b** bestehen jeweils aus mehreren über dem Umfang der Längsachse verteilten etwa radial abstehenden Transportlippen, die in die an der Oberfläche des Behälterinhaltes sich bildende Flotatschicht **10** eintauchen und das Flotat in eine zwischen den Paddelräumer **6a**, **6b** angeordnete Flotatabzugsrinne **7** schöpfen. Die Paddelräumer **6a**, **6b** werden einzeln mittels Antriebsmotoren **8a**, **8b** in Rotation versetzt.

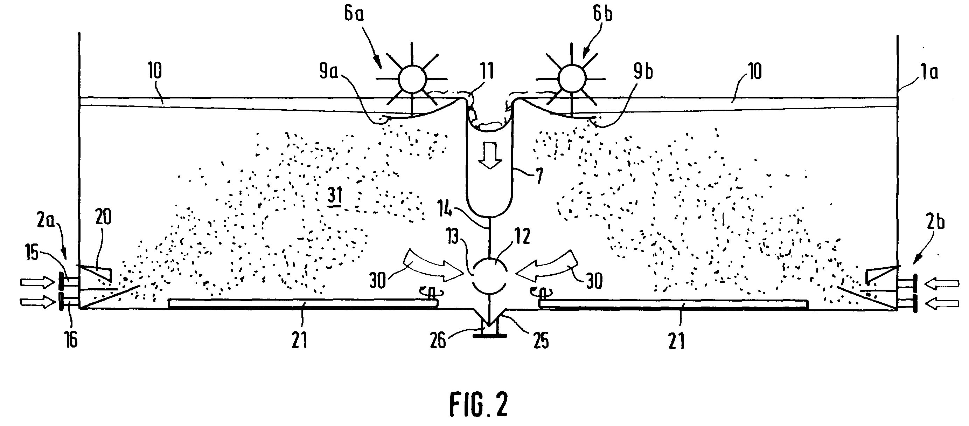

Wie Fig. 2 zu entnehmen ist, weist die Flotatabzugsrinne **7** für das Flotat zwei rinnenartige Leitbleche **9a**, **9b** auf, die in die Flotatschicht **10** eintauchen und über die das Flotat von den Paddelräumern **6a**, **6b** in die eigentliche Rinne **7** gefördert wird.

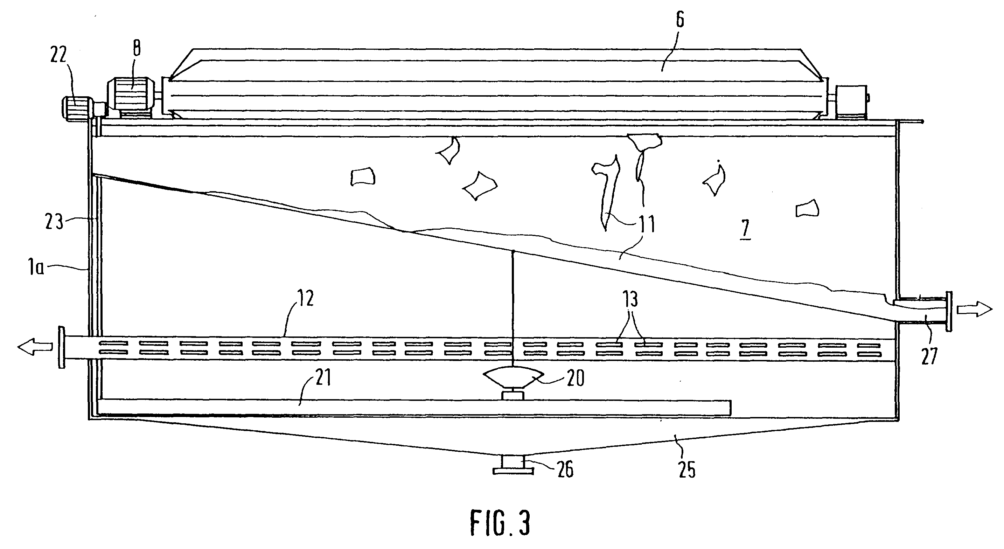

In Fig. 3 ist zu erkennen, daß der Boden der Flotatabzugsrinne **7** schräg nach unten verläuft um ein Abführen des zähflüssigen Flotats **11** sicherzustellen. Die Flotatabzugsrinne **7** ist wiederum mit einer Flotat-Abführleitung **27** verbunden.

Wie in den Figuren 2 und 3 dargestellt ist, befindet sich unterhalb der Flotatabzugsrinne **7** ein Klarwasser-Ablaufrohr **12**, das entlang seiner Erstreckung im Flotationsbehälter **1a** mit einer Vielzahl von Durchlässen **13** versehen ist, über die das Klarwasser zur Entfernung aus dem Flotationsbehälter **1a** eintreten kann.

Gemäß einer erfindungsgemäßen Ausbildung ist der Flotationbehälter **1a** durch eine in Fig. 2 gezeigte diagonale Trennwand **14** in zwei separate Teilbehälter aufgeteilt, wobei die Trennwand **14** von unterhalb der Flotatabzugsrinne **7** bis zum Behälterboden reicht. Dabei können auch zwei getrennte Klarwasser-Abflaufrohre in jedem Teilbehälter vorgesehen werden, oder es wird, wie in Fig. 2 dargestellt, ein gemeinsames Klarwasser-Abflaufrohr **12** verwendet.

Die Zuführung des schwebstoffhaltigen Wassers erfolgt bei der dargestellten bevorzugten Ausführungsform der Erfindung über die Flüssigkeitseinlässe **2a** und **2b** in den Behälterecken. Wie insbesondere in den Figuren 4a und 4b gezeigt ist, ist ein Einlaß **15** für die schwebstoffhaltige Flüssigkeit oberhalb eines Einlasses **16** für gasgesättigte druckbehaftete Flüssigkeit vorgesehen, wobei der Einlaß **16** ein Druckentspannungselement **17** umfaßt oder selbst als solches ausgebildet ist. Die Wasserströmungen werden durch geeignete Leitbleche **18** und **19** geführt, um eine möglichst günstige Verteilung in Horizontalrichtung und Vermengung der beiden Fluidströmungen zu erreichen. Oberhalb des Einlasses **15** für die schwebstoffhaltige Flüssigkeit ist eine vorzugsweise verschwenkbare Einströmblende **20** angeordnet, um den Strömungsverlauf abhängig vom Durchsatz, Verschmutzungsgrad oder anderen Parametern optimal einstellen zu können.

Am Boden des Flotationsbehälters **1a** sind bei der bevorzugten Ausführungsform mehrere Sedimentwischer **21** vorgesehen, die im Bereich der nicht mit Flüssigkeitseinlässen **2a, 2b** versehenen Behälterecken um vertikale Achsen verschwenkbar angebracht sind. Beispielhaft ist in Fig. 3 eine Antriebseinheit **22** dargestellt, die über eine Welle **23** den zugehörigen Sedimentwischer **21** entlang des mit dem Bezugszeichen **24** in Fig. 1 gekennzeichneten Schwenkbereiches verschwenkt. Der oder die Sedimentwischer dienen dazu, sich auf dem Behälterboden ablagernde Sedimente in eine unterhalb des Klarwasser-Ablaufrohres **12** in den Behälterboden eingelassene Sedimentmulde **25** zu schieben. Wie in Fig. 3 gezeigt, ist die Sedimentmulde **25** im Schnitt vorzugsweise V-förmig ausgebildet und mündet in eine Sediment-Abführleitung **26**. Soweit eine Trennwand **14** (Fig. 2) im Flotationsbehälter **1a** vorgesehen ist, endet diese vorzugsweise in der Sedimentmulde **25**, wobei von beiden Seiten der Trennwand **14** Sedimentationen von den Sedimentwischern **21** eingeschoben werden können.

Nachfolgend wird der Flotationsprozeß unter Verwendung der erfindungsgemäßen Vorrichtungen im einzelnen beschrieben.

Das Rohwasser, aus dem die festen Stoffe abgeschieden werden sollen, wird mit einer nicht dargestellten Pumpe zu dem Flotationsbehälter **1a** bzw. **1b** gepumpt, in dem die feste und flüssige Phase getrennt werden, so daß zwei Teilströme entstehen, nämlich die flüssige annähernd feststoffreie Klarphase **30** und die feste Phase, die auch als Flotat bezeichnet werden kann und den größten Anteil der Feststoffe enthält. Das Flotat wiederum sammelt sich in der Flotatschicht **10**. Dabei können vor der Einleitung in den Flotationsbehälter **1a** bzw. **1b** geeignete Chemikalien zur Fällung und/oder Flockung zugegeben werden, was dazu dient, gelöste bzw. teilgelöste, koloidal vorliegende und freie Feststoffe in eine Flockenform überzuführen.

Zur Bildung von Gasblasen wird in einer nicht dargestellten Vorrichtung ein geeignetes Gas, beispielsweise Luft, unter einem Druck gelöst, der vorzugsweise deutlich über dem Umgebungsdruck liegt. Die flüssige Phase mit dem gelösten Gas wird unter Beibehaltung des hohen Drucks mittels der Einlässe **15** in den Flotationsbehälter **1a** eingeführt oder zuvor in das Zulaufrohr entspannt, wodurch feine Mikrobläschen entstehen.

Die Entspannung des Gasblasengemisches bzw. die Strömungsführung ist derart ausgebildet, daß im Flotationsbehälter **1a** bzw. **1b** eine vorzugsweise horizontale Zweischichtströmung entsteht. Diese besteht aus einer Gasblasenströmung im unteren Bereich und einer Strömung des Rohwassers im oberen Bereich des Flotationsbehälters **1** mit den Feststoffen in geflockter Form. Alternativ können die Teilströme auch vor dem Eintritt in den Flotationsbehälter gemischt werden. Die entstandenen Gasblasen **31** können an den abzuscheidenden Feststoff-Flocken anhaften und bewirken so ein Abscheiden durch Aufschwimmen bzw. Flotation der geflockten Feststoffverbände. Die Einströmung erfolgt bei dem Behälter **1a** gemäß Fig. 1 jeweils aus zwei gegenüberliegenden Ecken zur Mitte hin. Der Zulauf ist dabei derart gestaltet, daß eine horizontale Einströmung im unteren Bereich des Flotationsbehälters **1a** bzw. **1b** realisiert werden kann, die zur Mitte hin ausgerichtet ist.

Oberhalb des Haupteinströmrohres befindet sich die beweglich gelagerte Einströmblende **20**. Diese Einströmblende **20** ist so ausgeführt, daß eine gleichmäßige Einströmung über einen Winkel von 90° möglich ist. Da die Einströmung von einer Ekke der quadratischen Grundform erfolgt, reduziert sich die Strömungsgeschwindigkeit sofort drastisch, was ideale Bedingungen für den Flotationsvorgang schafft. Bedingt durch die geringe Strömungsgeschwindigkeit können die Gasblasen an den Feststoff-/Flockenverbänden anheften und diese zum Aufschwimmen bringen.

In der Mitte der zwei gegenüberliegenden Einströmpunkte sind diagonal zum Quadrat sowohl das Klarwasser-Ablaufrohr **12** für die nahezu feststoffreie Klarphase, wie auch die Räumvorrichtungen **6** für den anfallenden Flotatschlamm angeordnet. Die sich zur Mitte hin begebende Flotat-/Schlammphase wird mit Hilfe der beiden gegenläufig rotierenden Paddelräumern **6a, 6b** erfaßt. Durch das Rotieren dieser Paddelräumer **6a, 6b** wird die Flotatschicht **10** längs der Diagonale in die ein- oder beidseitig geneigte Flotatabzugsrinne **7** transportiert, von wo aus der Schlamm **11** nach außen abläuft und über die Flotat-Abführleitung **27** abgezogen werden kann.

Der Abzug der Klarphase erfolgt über das horizontales, im unteren Drittel des Flotationsbehälters **1a**, **1b** diagonal angeordnete, mit Durchlässen **13** versehenes Klarphasen-Ablaufrohr **12**, wobei vorzugsweise die Öffnungsquerschnitte der Durchlässe **13** variieren, so daß ein gleichmäßiger Abzug über die ganze Länge möglich ist.

Nicht flotierender Schwerschmutz bzw. Sedimente sammeln sich am Behälterboden an. Um diese Sedimente aus dem Flotationsbehälter **1a** bzw. **1b** zu entfernen, werden diese mit Hilfe der Sedimentwischer **21** in die ebenfalls diagonal angeordnete Sedimentmulde **25** am Behälterboden geschoben. Jede Hälfte des quadratischen, diagonal geteilten Flotationsbehälters **1a** besitzt zwei Sedimentwischer **21**, die um eine vertikale Achse drehen. Die Anordnung der Achsen erfolgt an der Behälteraußenwand nahe den Quadratecken, an denen nicht eingeströmt wird. Die Lagerung der drehbaren Wellen **23** wird an der Behälteraußenwand befestigt. Die Sedimentwischer **21** selbst werden an einem Ende an der vertikalen Wischerachse befestigt und ist so ausgeführt, daß eine Gummilippe, die sich am Boden angesammelten Sedimente in die Sedimentmulde **25** schiebt. Der Wischvorgang erfolgt in Intervallen entsprechend der Erfordernissen der Applikation. Zum Antrieb der Wischerachse wird ein Getriebemotor **22** verwendet. Der Wischvorgang erfolgt so, daß nach dem Eneichen der Sedimentmulde **25** der Sedimentwischer **21** unmittelbar in die Ausgangsposition zurückfährt.

Die in einer Behälterhälfte gegenüberliegenden Sedimentwischer **21** werden dabei wechselseitig in Intervallen betrieben, so daß eine Berührung der beiden Sedimentwischer **21** ausgeschlossen ist.

Je nach Bedarf kann die Einströmung m die Anlage so realisiert werden, daß Rohwasser und Gasblasenströmung getrennt in den Flotationsbehälter **1a** bzw. **1b** eintreten. Die Zuführung der Gasblasenströmung soll grundsätzlich unterhalb der Rohwasserströmung mit der gleichen oder einer gößeren Geschwindigkeit erfolgen. Die Entspannung des gesättigten Flüssigkeits-Gasgemisches mit überhöhtem Druck kann sowohl vor dem Einlauf in den Flotationsbehälter **1a** bzw. **1b**, als auch im Behälter selbst erfolgen.

## Patentansprüche

1. Vorrichtung zur Gasblasenflotation mit einem viereckigen Flotationsbehälter (1a, 1b), der in zwei einander gegenüberliegenden Ecken jeweils einen Flüssigkeitseinlaß (2a, 2b) für eine schwebstoffhaltige Flüssigkeit sowie eine gasblasenversetzte Flüssigkeit aufweist, und der mit Ablaufeinrichtungen (6a, 6b) für den Ablauf des Flotats versehen ist, wobei der Flotationsbehälter (1a, 1b) im wesentlichen rautenförmig ausgebildet ist, **dadurch gekennzeichnet**, daß die Ablaufeinrichtungen (6a, 6b) mit Abschöpforganen versehen sind und die Ablaufeinrichtungen (6a, 6b) entlang der Diagonalen durch die nicht mit Flüssigkeitseinlässen (2a, 2b) versehenen Ecken verlaufen.

2. Vorrichtung nach Anspruch 1, dadurch gekennzeichnet, daß die Abschöpfeinrichtungen als zwei zueinander parallele Mehrfach-Paddelräumer (6a, 6b) ausgebildet sind, zwischen denen eine Flotat-Abzugsrinne (7) angeordnet ist.

3. Vorrichtung nach Anspruch 2, dadurch gekennzeichnet, daß unterhalb der Flotat-Abzugsrinne (7) ein Klarflüssigkeits-Ablaufrohr (12) angeordnet ist.

4. Vorrichtung nach Anspruch 3, dadurch gekennzeichnet, daß unterhalb der Flotat-Abzugsrinne (7) eine Trennwand (14) vorgesehen ist, die den Flotationsbehälter (1a) in zwei separate Flotationsbehälter aufteilt.

5. Vorrichtung nach einem der vorhergehenden Ansprüche, dadurch gekennzeichnet, daß am Boden des Flotationsbehälters (1a, 1b) mindestens ein Sedimentwischer (21) vorgesehen ist.

6. Vorrichtung nach Anspruch 5, dadurch gekennzeichnet, daß am Behälterboden eine Sediment-Ablaufrinne (25) ausgebildet ist, in die der mindestens eine schwenkbare Sedimentwischer (21) Sedimentschlamm befördert.

7. Vorrichtung nach einem der vorhergehenden Ansprüche, dadurch gekennzeichnet, daß der Flüssigkeitseinlaß (2a, 2b) einen Einlaß (15) für die schwebstoffhaltige Flüssigkeit und darunter einen separater Einlaß (16) für gasblasenhaltige Flüssigkeit umfaßt.

8. Vorrichtung nach Anspruch 7, dadurch gekennzeichnet, daß der Einlaß (16) für gasblasenhaltige Flüssigkeit ein Entspannungselement (17) umfaßt oder als solches ausgestaltet ist.

9. Vorrichtung nach Anspruch 8, dadurch gekennzeichnet, daß oberhalb des Flüssigkeitseinlasses (2a, 2b) eine horizontal verschwenkbare Einströmblende (20) angeordnet ist.

10. Vorrichtung nach Anspruch 1, dadurch gekennzeichnet, daß der Flotationsbehälter (1a, 1b) im Querschnitt quadratisch ist.

## Claims

1. Apparatus for gas bubble floatation, having a quadrangular floatation tank (1a, 1b) which comprises, in each of two oppositely situated corners, respective liquid inlets (2a, 2b) for a liquid containing suspended material and for a liquid mixed with gas bubbles, and which tank is provided with discharge means (6a, 6b) for the discharge of the floatate, the floatation tank (1a, 1b) having a substantially rhombic configuration, characterised in that the discharge means (6a, 6b) are provided with skimmers, and the discharge means (6a, 6b) extend along the diagonal through the corners which are not provided with liquid inlets (2a, 2b).

2. Apparatus according to claim 1, characterised in that the skimmers are configured as two multi-paddle scrapers (6a, 6b), which lie parallel to each other, and between which is disposed a floatate discharge chute (7).

3. Apparatus according to claim 2, characterised in that a clarified liquid discharge tube (12) is disposed beneath the floatate discharge chute (7).

4. Apparatus according to claim 3, characterised in that a dividing wall (14) is provided beneath the floatate discharge chute (7) and divides the floatation tank (1a) into two separate floatation tanks.

5. Apparatus according to one of the preceding claims, characterised in that at least one sediment wiper (21) is provided at the base of the floatation tank (1a, 1b).

6. Apparatus according to claim 5, characterised in that a sediment discharge chute (25) is provided at the tank base, and at least one pivotable sediment wiper (21) conveys sediment sludge into said chute.

7. Apparatus according to one of the preceding claims, characterised in that the liquid inlet (2a, 2b) includes an inlet (15) for the liquid containing suspended material and, therebeneath, a separate inlet (16) for liquid containing gas bubbles.

8. Apparatus according to claim 7, characterised in that the inlet (16) for liquid containing gas bubbles includes pressure-relieving means (17) or is configured as such.

9. Apparatus according to claim 8, characterised in that a horizontally pivotable inlet screen (20) is disposed above the liquid inlet (2a, 2b).

10. Apparatus according to claim 1, characterised in that the floatation tank (1a, 1b) has a square cross-section.

## Revendications

1. Dispositif de flottation par bulles de gaz, avec un récipient de flottation (1a, 1b) rectangulaire, qui présente en deux angles opposés l'un à l'autre, respectivement, une admission de liquide (2a, 2b) pour un liquide contenant des substances flottantes ainsi qu'un liquide mélangé à des bulles de gaz, et qui est doté de dispositifs d'évacuation (6a, 6b) pour l'évacuation du flottat, le récipient de flottation (1a, 1b) ayant une forme sensiblement en losange, caractérisé en ce que les dispositifs d'évacuation (6a, 6b) sont dotés d'organe d'enlèvement du dessus du liquide et les dispositifs d'évacuation (6a, 6b) s'étendent le long des diagonales, en passant par les angles non dotés des admissions de liquide (2a, 2b).

2. Dispositif selon la revendication 1, caractérisé en ce que les dispositifs d'enlèvement du dessus du liquide sont réalisés sous la forme de deux racleurs à palettes multiples (6a, 6b) parallèles l'un à l'autre, entre lesquels est disposée une goulotte d'extraction de flottat (7).

3. Dispositif selon la revendication 2, caractérisé en ce qu'un tube d'évacuation de liquide clarifié (12) est disposé au-dessous de la goulotte d'extraction de flottat (7).

4. Dispositif selon la revendication 3, caractérisé en ce qu'au-dessous de la goulotte d'extraction de flottat (7) est prévue une paroi de séparation (14) subdivisant le réservoir de flottation (1a) en deux réservoirs de flottation séparés.

5. Dispositif selon l'une des revendications précédentes, caractérisé en ce qu'au fond du réservoir de flottation (1a, 1b) est prévu au moins un essuyeur de sédiment (21).

6. Dispositif selon la revendication 5, caractérisé en ce qu'au fond du récipient est réalisée une goulotte d'évacuation de sédiment (25) dans laquelle le au moins un essuyeur de sédiment (21) pivotant véhicule de la boue de sédimentation.

7. Dispositif selon l'une des revendications précédentes, caractérisé en ce que l'entrée de liquide (2a, 2b) comprend une admission (15) pour le liquide contenant des substances flottantes et, au-dessous, une admission (16) séparée pour du liquide contenant des bulles de gaz.

8. Dispositif selon la revendication 7, caractérisé en ce que l'admission (16) destinée au liquide contenant des bulles de gaz comprend un élément de détente (17) ou bien un élément réalisé en tant que tel.

9. Dispositif selon la revendication 8, caractérisé en ce qu'au-dessus de l'admission de liquide (2a, 2b) est disposé un écran ou diaphragme d'entrée d'écoulement (20) susceptible de pivoter horizontalement.

10. Dispositif selon la revendication 1, caractérisé en ce que le réservoir de flottation (1a, 1b) a une section transversale carrée.
